# Europäisches Patentamt
# European Patent Office
# Office européen des brevets

(19)

(11) Numéro de publication: **0 015 836**
**B1**

(12)

# FASCICULE DE BREVET EUROPEEN

(45) Date de publication du fascicule du brevet:
02.02.83

(51) Int. Cl.³: **G 01 L 9/00**, G 01 L 11/00

(21) Numéro de dépôt: 80400284.8

(22) Date de dépôt: 29.02.80

(54) **Capteur de pression à ondes élastiques de surface.**

(30) Priorité: 09.03.79 FR 7906134

(43) Date de publication de la demande:
17.09.80 Bulletin 80/19

(45) Mention de la délivrance du brevet:
02.02.83 Bulletin 83/5

(84) Etats contractants désignés:
DE GB IT NL SE

(56) Documents cités:
GB-A-1 248 087
GB-A-1 483 344
US-A-3 333 472
US-A-3 817 107
US-A-4 085 620
US-A-4 100 811

(73) Titulaire: THOMSON-CSF, 173, Boulevard Haussmann,
F-75379 Paris Cedex 08 (FR)

(72) Inventeur: Hartemann, Pierre,
"THOMSON-CSF" SCPI 173, Bld. Haussmann,
F-75360 Paris Cedex 08 (FR)

(74) Mandataire: Wang, Pierre et al, THOMSON-CSF
SCPI 173, Bld Haussmann, F-75379 Paris Cedex 08 (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Capteur de pression à ondes élastiques de surface

La présente invention concerne un capteur de pression à ondes élastiques de surface.

Il est connu d'utiliser les ondes élastiques de surface se propageant entre deux transducteurs à peignes interdigités dans un substrat piézo-électrique pour mesurer des accélérations, des forces et des pressions s'exerçant sur une partie amincie de ce substrat. A cet effet, la ligne à retard formée entre les deux transducteurs est bouclée sur elle-même au moyen d'un amplificateur et constitue un oscillateur dont la fréquence varie en fonction des variations de contraintes dans le matériau, celles-ci provoquant des variations du temps de propagation des ondes de surface. Pour compenser l'effet des dérives en température qui influent également sur la fréquence d'oscillation, il est également connu de réaliser deux oscillateurs semblables comprenant respectivement deux lignes à retard déposées sur le même substrat et localisées sur celui-ci de façon qu'une variation de température produise dans chaque ligne une variation de temps de propagation dans le même sens, alors qu'une variation de la force appliquée à la partie amincie du substrat produit des variations en sens contraires. En appliquant les signaux de sortie des deux oscillateurs à un mélangeur, on obtient un signal dont la variation de fréquence due à la force est la somme des variations de fréquence dans chaque oscillateur, alors que les effets des variations de température sont très réduits sinon annulés.

Un dispositif de ce type est décrit par exemple dans le brevet américain N° 4100811. Selon ce brevet, les deux lignes à retard sont disposées à la sruface d'un substrat piézo-électrique évidé en son centre pour former une zone mince circulaire dans laquelle peuvent s'échanger les énergies électriques et élastiques.

L'invention propose d'utiliser les résultats connus pour effectuer des mesures de dépression par rapport à la pression atmosphérique. Elle peut être notamment utilisée pour la commande d'avance de l'allumage d'un moteur d'automobile. Le problème posé par de tels capteurs où le substrat est fixé rigidement sur son support est constitué par le coefficient de dilatation qui doit être tel qu'il crée le moins possible de contraintes thermiques au sein de la plaquette. Selon l'invention, la solution de ce problème est donnée par la partie caractérisante de la revendication 1.

Dans une forme d'exécution particulièrement avantageuse, le support est lui-même fixé à l'enveloppe d'une enceinte communiquant avec le raccord manométrique contenant le gaz, de façon à éviter tout contact entre le gaz et la deuxième face de la plaquette, celle-ci étant une face polie sur laquelle sont déposés les transducteurs formant deux lignes à retard. La deuxième face de la plaquette peut être soumise à la pression de l'air ambiant $p_0$. La plaquette est reliée à un circuit imprimé portant tous les circuits électroniques nécessaires; l'ensemble est contenu dans une enceinte close permettant que la pression atmosphérique à laquelle est soumise la face polie de la plaquette reste constante. Des moyens supplémentaires peuvent être prévus pour éviter la pollution de la face polie.

D'autres caractéristiques de l'invention apparaîtront mieux au moyen de la description ci-après présentée à titre d'exemple non limitatif et des figures annexées parmi lesquelles:

les fig. 1 et 2 illustrent le fonctionnement du capteur selon l'invention;

les fig. 3 et 4 représentant deux configurations possibles de transducteurs;

la fig. 5 représente un capteur selon l'invention;

les fig. 6 et 7 représentent des variantes de réalisation de l'invention.

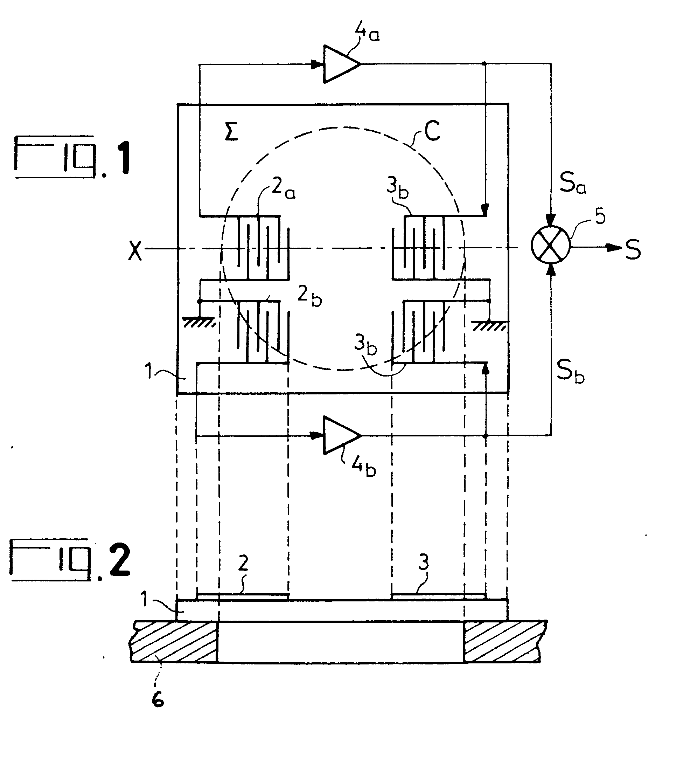

Les fig. 1 et 2 représentent respectivement en vue de dessus et en coupe un capteur de pression à ondes élastiques de surface. Ce capteur comprend un substrat piézo-électrique, par exemple en quartz, constituant une plaquette mince 1 de forme quelconque, par exemple rectangulaire, dont les bords (les 4 côtés dans le cas d'une plaquette rectangulaire) sont collés rigidement au moyen d'une colle dure ou souple sur un support 6 constitué d'un matériau différent de la plaquette et dont le coefficient de dilatation est tel qu'il ne crée pas de contrainte thermique susceptible de fausser la mesure. La forme de ce support laisse un évidement central circulaire dont la projection C sur la plaquette est représentée sur la fig. 1 en pointillés. La surface interne à ce cercle constitue la partie utile de la plaquette 1. Pour permettre la propagation des ondes élastiques de surface sur la face supérieure Σ de la plaquette visible sur la fig. 1, c'est-à-dire la face opposée à celle dont les bords sont collés au support, cette face est polie. Dans la zone utile sont réalisées deux lignes à retard, l'une d'axe X passant par le centre du cercle C et formé entre deux transducteurs 2a et 3a, l'autre formée entre deux transducteurs 2b et 3b, d'axe parallèle X, disposée proche de la périphérie de la zone utile, de façon que les effets d'une différence de pression entre les deux faces sur les contraintes imposées aux zones correspondantes de la plaquette, donc sur le temps de propagation des ondes, soient de sens opposés pour les deux lignes. Les transducteurs sont par exemple formés de doigts d'aluminium déposés par photogravure. On réalise deux oscillateurs indépendants en bouclant les lignes respectivement par des circuits amplificateurs: Sa et Sb ont des fréquences Fa et Fb qui varient en sens contraire lorsque la différence de pression varie. Ces signaux sont mélangés dans un mélangeur 5 qui fournit le signal de sortie S, de fréquence Fa - Fb. Ainsi, les variations de fréquence dans les deux lignes dues à la dépression, qui sont de signes opposés, s'ajoutent, tandis que celles dues aux dérives thermiques, qui sont de même signe, se retranchent.

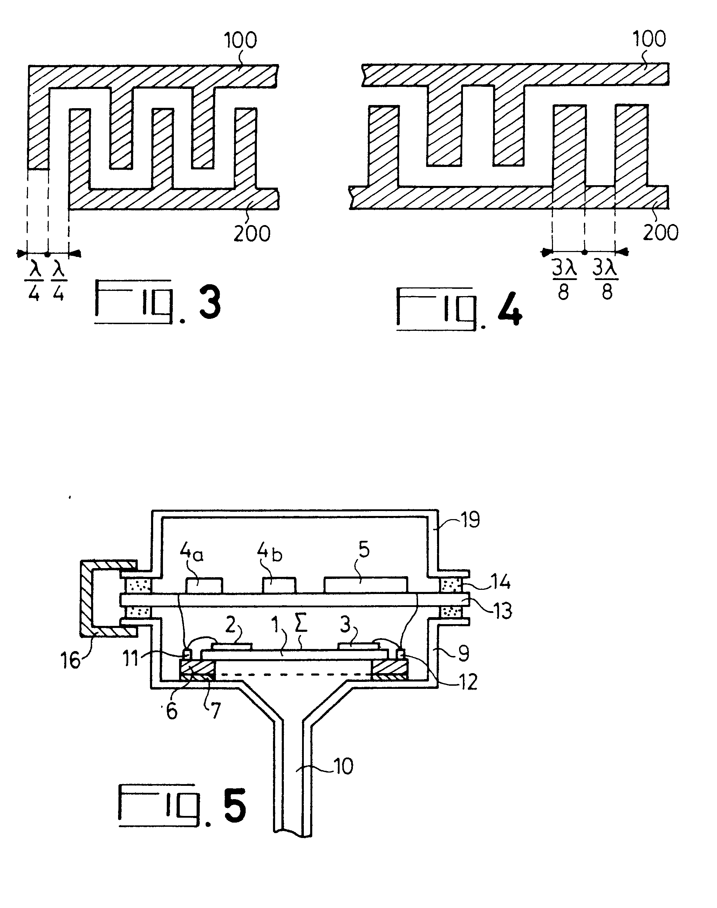

Les transducteurs entre lesquels sont formées les lignes à retard sont constitués de peignes interdigités réalisables par des procédés classiques de photolithographie. Une configuration classique de transducteur est représentée sur la fig. 3. Les doigts des peignes 100 et 200 sont constitués de bandes métalliques équidistantes de longueur constante. La distance entre deux bandes consécutives se partage à peu près également entre la partie métallisée et l'intervalle non métallisé et est égale à $\frac{\lambda}{2}$ où $\lambda$ est la longueur d'onde des ondes se propageant à la surface du substrat piézo-électrique. Une variante de configuration est représentée sur la fig. 4. Selon cette variante, chaque doigt des peignes 100 et 200 est constitué de deux bandes métalliques de largeur $\frac{3\lambda}{8}$, séparées par des intervalles également de largeur $\frac{3\lambda}{8}$, si bien que la distance entre deux doigts consécutifs est égale à $\frac{3\lambda}{8}$. Ainsi, les ondes couplées au moyen de ce transducteur sont des harmoniques de rang 3. Cette configuration présente deux avantages principaux sur la précédente: d'une part, elle permet d'éviter l'effet des réflexions sur les dents puisque les ondes réfléchies par deux bandes successives, au lieu de se trouver en phase, sont en opposition de phase et s'annulent; d'autre part, les bandes métalliques sont plus larges et donc de réalisation plus aisée. Pour l'invention, la deuxième configuration sera donc préférée à la première, soit pour l'un des transducteurs de chaque ligne, soit pour les deux.

La fig. 5 représente une coupe d'un capteur de pression selon l'invention. L'élément principal de ce capteur est une plaquette piézo-électrique du type décrit précédemment. Les différents éléments du capteur sont contenus dans une enceinte délimitée par deux capots 9 et 19 que l'on assemble après· avoir introduit les différents éléments. Les bords de la plaquette 1 sont collés sur un support 6. Ce support 6 est lui-même collé au moyen d'une colle souple sur la base du capot 9. L'espace délimité par le capot 9, le support 6 et la plaquette 1 communique avec un raccord manométrique 10 contenant un fluide dont on désire mesurer la pression p, soit absolue, soit différentielle par rapport à la pression atmosphérique par exemple. Le support 6 est fixé au capot 9 de façon à obtenir une étanchéité parfaite entre le contenu du raccord 10 et l'enceinte définie par l'espace compris entre les capots 9 et 19 au-dessus de la plaquette 1. Le fluide contenu dans le raccord 10 se trouve en contact avec la face de la plaquette 1 opposée à la surface polie $\Sigma$; cette face $\Sigma$ porte les transducteurs dont les traces 2 et 3 sont visibles sur la figure formant les lignes à retard comme décrit précédemment. Dans l'enceinte est également placé un circuit imprimé 13 qui est fixé par ses bords entre les deux bords aplatis des capots 9 et 19. Ceux-ci sont réunis par des joints 14 assurant une bonne étanchéité et, éventuellement, par d'autres moyens d'assemblage 16. Le circuit imprimé 13 porte les différents circuits électroniques, par exemple les amplificateurs 4a et 4b, et les moyens mélangeurs 5 reportés sur la fig. 1. Ce circuit imprimé 13 doit donc être relié électriquement aux transducteurs d'entrée-sortie des lignes à retard. Cette liaison peut se faire par l'intermédiaire de plots 11 et 12 disposés sur le support 6 à côté de la plaquette 1. Le fonctionnement du capteur découle des résultats exposés précédemment. Du côté du raccord manométrique 10, une pression p s'exerce sur la face inférieure de la plaquette 1. Sur l'autre face $\Sigma$ s'exerce par exemple une pression $p_o$. La différence de pression $p - p_o$ entraîne des déformations de la plaquette en sens inverse pour les deux lignes, provoquant des variations de fréquence $\Delta Fa$ et $\Delta Fb$ de signes contraires. Le signal de sortie S que l'on extrait du mélangeur 5 a pour fréquence $Fa - Fb + \Delta Fa - \Delta Fb$; on peut filtrer ce signal de façon à obtenir uniquement la fréquence $\Delta Fa - \Delta Fb$. On détermine ainsi la différence de pression $p - p_o$. Pour déterminer la valeur exacte de p, il est nécessaire de connaître la pression $p_o$. Le dispositif représenté sur la fig. 5 comporte un capot 19 fermé, si bien que le volume d'air contenu au-dessus de la plaquette 1 varie lorsque la plaquette 1 se déforme. Il en résulte une variation de la pression $p_o$. Le dispositif représenté sur la fig. 5 est utilisable uniquement dans le cas où l'on fait le vide dans l'enceinte contenue entre les capots 9 et 19. On a ainsi la mesure de la pression absolue p.

Dans le cas le plus courant où l'on désire mesurer une dépression par rapport à la pression atmosphérique, il faut ménager une arrivée d'air dans le capot 19, de façon que la pression à laquelle est soumise la face $\Sigma$ de la plaquette 1 soit la pression de l'air ambiant. Le dispositif obtenu est représenté sur la fig. 6. Il est semblable à celui de la fig. 5, excepté les points suivants: un orifice d'équilibrage de pression 17 et prévu dans le capot 19 et le circuit imprimé 13 est percé d'un trou 18, par exemple central. Un problème se pose dans ce cas, lorsque l'air ambiant est chargé de poussières ou d'autres formes de pollution; en effet, ces poussières, en se déposant sur la face polie $\Sigma$ de la plaquette 1, risquent de détériorer les signaux obtenus. Il est donc nécessaire d'isoler d'une façon ou d'une autre la surface $\Sigma$ de toute forme de pollution, soit en filtrant l'air qui atteint cette face, soit en plaçant un matériau au-dessus de la surface $\Sigma$ transmettant intégralement la pression $p_o$, mais en empêchant que les poussières n'atteignent la surface $\Sigma$. L'une des solutions possibles est représentée sur la fig. 6. Il s'agit d'un filtre à air en forme de serpentin 22 dont un orifice communique avec le trou 18 du circuit imprimé 13 et l'autre orifice communique avec la partie supérieure de l'enceinte. Les poussières contenues dans l'air se déposent sur les parois du serpentin, et l'air qui arrive dans la partie inférieure de l'enceinte, c'est-à-dire en contact avec la surface $\Sigma$, est débarrassé de toutes les poussières. Le dispositif de la fig. 6 a été réalisé avec une plaquette de quartz coupe Y déposé sur un support 6 d'acier inoxydable ou de céramique alumine ménageant une partie utile de diamètre 1 cm. La plaquette a une épaisseur de 250 µ. Les capots 9 et 19 sont en plastique, de même que le raccord 10, qui peut aussi être en tôle emboutie. Le circuit imprimé 13 est une plaquette de céramique. Les circuits électroniques qui y sont placés sont des circuits intégrés de type courant. On ajuste la fréquence centrale des oscillateurs aux environs de 105 MHz. Cet ajustement peut se faire par une légère variation de la longueur des connexions dans la boucle de l'un des oscillateurs ou des deux. On a obtenu une sensibilité de 40 kHz/bar. La fréquence du signal de sortie du capteur est de quelques dizaines de kHz pour une pression différentielle maximale mesurée de 2 bar pour obtenir une bonne linéarité de la mesure.

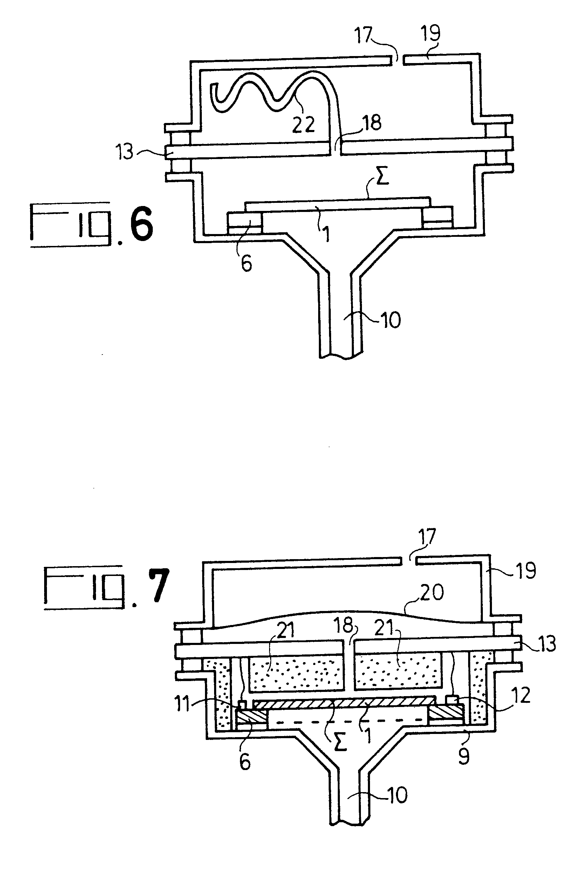

Une autre façon de supprimer les problèmes de pollution est représentée sur la fig. 7. Elle consiste à placer au-dessus du circuit imprimé 13 une membrane souple 20 fixée par exemple dans le capot 9, empêchant toute communication d'air entre la partie située au-dessus et la partie située en dessous. Pour éviter que les variations de pression entre les deux parties introduisent une trop grande déformation de la membrane, il est préférable que le volume d'air contenu en dessous de la membrane soit le plus faible possible. A cet effet, il est possible de remplir ce volume d'un matériau de remplissage 21, excepté un espace libre laissé au-dessus de la surface Σ et des passages pour les connexions entre les transducteurs et le circuit imprimé 13.

Le capteur de l'invention trouve son application notamment dans le domaine de l'automobile. Il peut être utilisé notamment pour régler la commande d'avance de l'allumage d'un moteur automobile. Dans ce cas, le fluide arrivant dans le raccord 10 est de l'air sous pression. Les modes de réalisation décrits ne sont donnés qu'à titre d'exemples non limitatifs, et d'autres variantes sont également possibles sans sortir du cadre de l'invention.

**Revendications**

1. Capteur de pression à ondes élastiques de surface du type comprenant un substrat piézo-électrique, deux lignes à retard utilisant des peignes interdigités étant réalisés sur une première face en des emplacements où des variations de pression entre les deux faces produisent des déformations de signes contraires et faisant respectivement partie de deux oscillateurs dont les signaux de sortie sont mélangés pour obtenir la différence de leur fréquence, lesdites lignes étant disposées asymétriquement sur ladite première face, caractérisé en ce que le substrat est une plaquette d'épaisseur uniforme ayant une deuxième face plane opposée à ladite première face dont les bords sont maintenus rigidement par collage contre un support comportant un évidement central, ledit support étant formé d'un matériau dont le coefficient de dilatation est tel qu'il ne crée pas de contrainte thermique au sein de la plaquette et étant relié par un joint souple à une base de capot munie d'un raccord manométrique contenant un gaz dont la pression est à mesurer.

2. Capteur de pression selon la revendication 1, caractérisé en ce que ledit capot comprend en outre une seconde partie, ledit support étant fixé à ladite base de façon que l'ensemble support-plaquette forme une cloison étanche vis-à-vis dudit gaz et que celui-ci exerce une pression sur la deuxième face de la plaquette, un circuit imprimé, portant des moyens amplificateurs et des moyens mélangeurs, étant introduit entre ladite base et ladite seconde partie et relié électriquement aux lignes à retard de façon à fournir un signal fonction de la pression à mesurer.

3. Capteur de pression selon la revendication 1, caractérisé en ce qu'un orifice d'équilibrage de pression est ménagé dans ladite seconde partie de façon que le capteur fonctionne en dépressiomètre.

4. Capteur de pression selon la revendication 3, caractérisé en ce qu'il comprend en outre des moyens protecteurs permettant d'éviter une pollution de la première face de la plaquette.

5. Capteur de pression selon la revendication 4, caractérisé en ce que ces moyens protecteurs comprennent un serpentin communiquant avec un trou ménagé dans le circuit imprimé de façon à former une chambre de décantation pour que l'air en contact avec la première face de la plaquette soit sans poussière.

6. Capteur de pression selon la revendication 4, caractérisé en ce que les moyens protecteurs comprennent une membrane souple formant une cloison étanche entre l'orifice d'équilibrage et la première face de la plaquette et transmettant intégralement la pression s'exerçant sur ses faces.

7. Capteur de pression selon la revendication 2, caractérisé en ce qu'on a fait le vide à l'intérieur du capot de façon que le signal de sortie soit fonction de la pression dudit gaz.

8. Capteur de pression selon l'une quelconque des revendications 1 à 7, caractérisé en ce que le support est en acier inoxydable.

9. Capteur de pression selon l'une quelconque des revendications 1 à 7, caractérisé en ce que le support est en céramique alumine.

10. Capteur de pression selon l'une quelconque des revendications 1 à 9, caractérisé en ce que la plaquette est en quartz.

11. Capteur de pression selon l'une quelconque des revendications 1 à 10, caractérisé en ce que les dents des peignes sont formées par dépôt de bandes d'aluminium sur la plaquette.

12. Capteur de pression selon l'une quelconque des revendications 1 à 11, caractérisé en ce que chaque doigt des peignes de l'un au moins des transducteurs de chaque ligne est constitué de deux bandes métalliques de largeur égale à $\frac{3\lambda}{8}$, deux bandes consécutives étant séparées par un intervalle de largeur $\frac{3\lambda}{8}$, $\lambda$ étant la longueur d'onde du mode fondamental susceptible de se propager dans le substrat piézo-électrique.

## Patentansprüche

1. Mit elastischen Oberflächenwellen arbeitender Druckfühler mit einem piezoelektrischen Substrat, zwei Verzögerungsleitungen mit ineinander verzahnten Kämmen, die auf einer ersten Fläche an Stellen angebracht sind, an denen Druckschwankungen zwischen den zwei Flächen Verformungen mit entgegengesetzten Vorzeichen hervorrufen, wobei die Verzögerungsleitungen jeweils einen Teil eines von zwei Oszillatoren bilden, deren Ausgangssignale zur Erzielung der Differenz ihrer Frequenz gemischt werden, und wobei die zwei Verzögerungsleitungen auf der ersten Fläche asymmetrisch angeordnet sind, dadurch gekennzeichnet, daß das Substrat eine Platte mit gleichmäßiger Dicke ist, die eine der ersten Fläche gegenüberliegende zweite ebene Fläche aufweist, deren Ränder durch Kleben starr gegen einen Träger gehalten sind, der mit einer Mittelausnehmung versehen ist, daß der Träger aus einem Material hergestellt ist, dessen Ausdehnungskoeffizient so beschaffen ist, daß im Inneren der Platte keine thermische Spannung entsteht, und daß der Träger mittels einer nachgiebigen Verbindung mit einem Haubenunterteil in Verbindung steht, der mit einem Druckanschluß versehen ist, der ein Gas enthält, dessen Druck gemessen werden soll.

2. Druckfühler nach Anspruch 1, dadurch gekennzeichnet, daß die Haube einen zweiten Teil aufweist, daß der Träger an dem Unterteil so befestigt ist, daß die Einheit aus Träger und Platte eine dichte Trennwand gegenüber dem Gas bildet und daß dieses einen Druck auf die zweite Fläche der Platte ausübt, und daß eine Verstärkereinrichtungen und Mischeinrichtungen tragende gedruckte Schaltung zwischen dem Unterteil und dem zweiten Teil der Haube eingefügt ist, die elektrisch so mit den Verzögerungsleitungen verbunden ist, daß sie ein vom zu messenden Druck abhängiges Signal liefern.

3. Druckfühler nach Anspruch 1, dadurch gekennzeichnet, daß in dem zweiten Teil der Haube eine Druckausgleichsöffnung angebracht ist, so daß der Druckfühler als Unterdruckfühler arbeitet.

4. Druckfühler nach Anspruch 3, gekennzeichnet durch Schutzvorrichtungen zum Verhindern einer Verschmutzung der ersten Fläche der Platte.

5. Druckfühler nach Anspruch 4, dadurch gekennzeichnet, daß die Schutzvorrichtungen eine Rohrschlange enthalten, die mit einem in der gedruckten Schaltung angebrachten Loch in Verbindung steht, damit eine Ablagerungskammer entsteht, die bewirkt, daß die mit der ersten Fläche der Platte in Kontakt stehende Luft staubfrei ist.

6. Druckfühler nach Anspruch 4, dadurch gekennzeichnet, daß die Schutzvorrichtungen eine nachgiebige Membran enthalten, die eine dichte Trennwand zwischen der Ausgleichsöffnung und der ersten Fläche der Platte bildet und den auf diese Flächen einwirkenden Druck uneingeschränkt überträgt.

7. Druckfühler nach Anspruch 2, dadurch gekennzeichnet, daß der Hohlraum im Inneren der Haube evakuiert ist, so daß das Ausgangssignal vom Druck des Gases abhängt.

8. Druckfühler nach einem der Ansprüche 1 bis 7, dadurch gekennzeichnet, daß der Träger aus rostfreiem Stahl besteht.

9. Druckfühler nach einem der Ansprüche 1 bis 7, dadurch gekennzeichnet, daß der Träger aus Aluminiumoxidkeramik besteht.

10. Druckfühler nach einem der Ansprüche 1 bis 9, dadurch gekennzeichnet, daß die Platte aus Quarz besteht.

11. Druckfühler nach einem der Ansprüche 1 bis 10, dadurch gekennzeichnet, daß die Zähne der Kämme durch Aufbringen von Aluminiumstreifen auf die Platte gebildet sind.

12. Druckfühler nach einem der Ansprüche 1 bis 11, dadurch gekennzeichnet, daß jeder Zahn der Kämme wenigstens eines der Wandler jeder Verzögerungsleitung von zwei Metallstreifen mit der Breite $\dfrac{3\lambda}{8}$ gebildet ist, wobei zwei aufeinanderfolgende Streifen durch einen Zwischenraum der Breite $\dfrac{3\lambda}{8}$ voneinander getrennt sind, und wobei $\lambda$ die Wellenlänge der Grundschwingung ist, die sich in dem piezoelektrischen Substrat ausbreiten kann.

## Claims

1. Elastic surface were pressure sensor comprising a piezo-electric substrate, two delay lines having interdigital combs disposed on a first surface at locations where pressure variations between the two surfaces cause deformations of opposite signs, each of said delay lines forming a part of one of two oscillators, the output signals of which being mixed to obtain the difference of their frequencies, said two delay lines being asymmetrically disposed on said first surface, characterized in that the substrate is a plate of uniform thickness having a second plane surface opposite to said first surface having its edges rigidly maintained against a support by bonding, said support having a central recess and being made of a material the coefficient of dilatation of which being such that internally of said plate no thermal stress arises and that the support is connected to a cap base by means of a flexible joint, said cap base being provided with a pressure coupling containing a gas the pressure of which is to be measured.

2. Pressure sensor according to claim 1, characterized in that said cap has a second part, the support being secured to said cap base so that the unit comprising said support and said plate forms a tight partition against the gas and that the latter exerts a pressure onto the second surface of said plate, and that between the base and the second part of said cap a printed circuit carrying amplifier means and mixing means is inserted, which means are electrically connected to said delay lines in such a manner that they furnish a signal depending on the pressure to be measured.

3. Pressure sensor according to claim 1, characterized in that in the second part of the cap a pressure vent opening is provided so that the pressure sensor also operates as a vacuum sensor.

4. Pressure sensor according to claim 3, characterized by protection means for preventing any contamination of the first surface of the plate.

5. Pressure sensor according to claim 4, characterized in that said protection means contain a worm pipe which is connected to a hole in said printed circuit so that a separation chamber is created which has the effect that the air which is in contact with the first surface of the plate is free of dust.

6. Pressure sensor according to claim 4, characterized in that said protection means contain a flexible membrane which forms a tight partition between the vent opening and the first surface of said plate and which transfers the pressure operating on said surface without any limitation.

7. Pressure sensor according to claim 2, characterized in that the cavity within the cap is evacuated so that the output signal depends on the pressure of the gas.

8. Pressure sensor according to any one of claims 1 to 7, characterized in that the support consists of stainless steel.

9. Pressure sensor according to any one of claims 1 to 7, characterized in that the support consists of alumina ceramic material.

10. Pressure sensor according to any one of claims 1 to 9, characterized in that the plate consists of quartz.

11. Pressure sensor according to any one of claims 1 to 10, characterized in that the teeth of said combs are formed by depositing stripes of aluminium on said plate.

12. Pressure sensor according to any one of claims 1 to 11, characterized in that each tooth of said combs of at least one of the transducers of each delay line is formed by two metal stripes having the width $\dfrac{3\lambda}{8}$, wherein two successive stripes are separated by a space of the width $\dfrac{3\lambda}{8}$, and wherein $\lambda$ is the length of the fundamental mode wave susceptible of being propagated in the piezo-electric substrate.

Fig.1

Fig.2

$$\frac{\lambda}{4} \quad \frac{\lambda}{4}$$

Fig. 3

$$\frac{3\lambda}{8} \quad \frac{3\lambda}{8}$$

Fig. 4

Fig. 5

Fig.6

Fig.7